# EUROPÄISCHE PATENTSCHRIFT

(11) **EP 1 995 101 B1**
(45) Veröffentlichungstag und Bekanntmachung des Hinweises auf die Patenterteilung: **14.03.2012**
(21) Anmeldenummer: 08007807.4
(22) Anmeldetag: 23.04.2008
(51) Int. Cl.: B60J 10/08

(54) **Verfahren zur Herstellung einer Dichtung für ein Fahrzeug sowie Metallform zur Durchführung des Verfahrens**
Method for manufacturing a seal for a vehicle and metal mould for carrying out the method
Procédé de fabrication d'un joint pour un véhicule et moule en métal pour la mise en oeuvre du procédé

(30) Priorität: 15.05.2007 DE 102007023013
(43) Veröffentlichungstag der Anmeldung: 26.11.2008
(73) Patentinhaber: Firma SPT Sealing Projects & Tooling GmbH, 41844 Wegberg (DE)
(72) Erfinder: Colak, Murat, 41751 Viersen (DE)
(74) Vertreter: Lau-Loskill, Philipp

(56) Entgegenhaltungen:
- EP-A- 0 832 776
- WO-A-2004/108458
- US-A- 5 374 386
- US-A- 5 472 544
- US-A- 5 839 232

## Beschreibung

Die vorliegende Erfindung betrifft ein Verfahren zur Herstellung einer Dichtung für ein Fahrzeug mit den Merkmalen des Oberbegriffs des Patentanspruchs 1 sowie eine Metallform zur Durchführung des Verfahrens mit den Merkmalen des Oberbegriffs des Patentanspruchs 9.

Üblicherweise werden im Kraftfahrzeugbau zwischen den beweglichen Teilen, wie beispielsweise Motorhaube, Kofferraumdeckel, Türen und Fensterscheiben, und den starren Teilen des Fahrzeuges, wie beispielsweise Rahmen, A-, B- und C-Säulen, Dichtungen eingesetzt, um einerseits einen Kontakt von Metall auf Metall oder Metall auf Glas zu verhindern und andererseits sicherzustellen, daß die beweglichen Teile und die damit zusammenwirkenden starren Teile staub-, lärm- und wasserdicht sind. Im eigentlichen Kontaktbereich der miteinander zusammenwirkenden Teile schließt dann der elastische Grundkörper der Dichtung den dazwischen vorhandenen spaltartigen Raum ab, wobei vielfach ein Bereich des elastischen Grundkörpers der Dichtung mit einer Florschicht, beispielsweise aus Polyamid- oder Polypropylen-Fasern, versehen ist. Eine derartige Florschicht wird auch in der entsprechenden Fachsprache als Beflockung oder Flockschicht bezeichnet. Insbesondere im Bereich der beweglichen Fensterscheiben, die zum Öffnen bzw. Schließen vielfach während des Gebrauchs des Fahrzeuges überwiegend senkrecht auf- und abwärtsbewegt werden, ist eine derartige Florschicht im Kontaktbereich zwischen Fensterscheibe und der Dichtung an der Dichtung angeordnet, wobei insbesondere diese Florschicht bewirkt, daß einerseits die Dichtung eng an der Fensterscheibe anliegt und andererseits die Auf- und Abwärtsbewegung der Fensterscheibe erleichtert wird, ohne daß es dabei zu unerwünschten Geräuschen kommt.

Um eine rundumlaufende Dichtung der Tür eines Fahrzeuges im Bereich der Fensteröffnung zur Verfügung zu stellen, wird zunächst der individuell auf das jeweilige Fahrzeug angepaßte elastische Grundkörper als endlose Dichtung erstellt, wobei im Rahmen dieses Herstellungsprozesses dann auch der für die Fensterscheibe als Führungsbereich vorgesehene Abschnitt der Dichtung mit einer Florschicht, in der Regel durch Beflockung oder als Flocktape, versehen wird. Hiernach wird dann im Rahmen der Konfektion aus dieser endlosen Dichtung eine an die jeweilige Fensteröffnung und insbesondere an den Fensterrahmen angepaßte Dichtung dadurch erstellt, daß eine vorgegebene Länge der endlosen Dichtung abgeschnitten wird, so daß dementsprechend dann das so erstellte Dichtungsteilelement endseitig durch eine thermische Behandlung verbunden wird. Im Bereich der endseitigen Verbindung des Dichtungsteilelementes werden insbesondere dann die miteinander zu verbindenden Enden während der thermischen Behandlung, die in der Regel ein Anvulkanisieren oder Vulkanisieren darstellt, durch Kontakt mit einer Metallform, die einerseits die für die Verbindung erforderliche Temperatur zur Verfügung stellt und andererseits durch Kontakt mit der Florschicht in ihrer Lage fixiert, was zur Folge hat, daß in der unmittelbaren Nähe des Verbindungsbereiches irreversible Druckstellen entstehen, die jedoch bis heute im Rahmen der Massenproduktion von Dichtungen größtenteils akzeptiert werden.

Ergänzend sei hier angemerkt, daß es abhängig vom jeweiligen Fahrzeugtyp auch die Möglichkeit gibt, daß mehrere Dichtungsteilelemente, die individuell unterschiedlich ausgestaltet sind, durch die zuvor beschriebene thermische Behandlung verbunden werden, so daß, abhängig von der Anzahl der Dichtungsteilelemente nicht nur, wie vorstehend beschrieben, ein einziges Dichtungsteilelement endseitig miteinander verbunden wird, sondern hierbei die einzelnen Zuschnitte, die die fertig konfektionierte Dichtung ausbilden, entsprechend der Anzahl der Ecken miteinander verbunden werden müssen. Auch bei dieser Art der Konfektion der fertigen Dichtung tritt das zuvor beschriebene Problem auf, wonach die hierfür verwendete Metallform aufgrund ihres Kontaktes mit der Florschicht im Bereich der Verbindung zu unerwünschten, irreversibelen Druckstellen und teilweise auch zu thermischen Florschädigungen führt.

Um diese unerwünschten irreversiblen Florveränderungen im Verbindungsbereich der Dichtungsteilelemente zu verhindern, ist es desweiteren bekannt, die Florschicht (Beflockung) benachbart zum Verbindungsbereich erst dann zu erstellen, wenn die entsprechende Dichtung einsetzbereit konfektioniert ist, so daß hierbei während der thermischen Behandlung die hierfür verwendete Metallform nicht in Kontakt mit einer Florschicht treten kann. Diese Herstellungsvariante ist jedoch sehr kostenintensiv, da sie einen zusätzlichen Arbeitsschritt in Form der nachträglichen Beflockung des Verbindungsbereiches beinhaltet.

Darüber hinaus hat man bereits versucht, die unerwünschte Florverlegung und -beschädigung im Bereich der Zone, in der die Metallform mit der Florschicht in Kontakt gebracht wird, dadurch zu verhindern, daß in dieser Kontaktzone ein Drahtgitter an der Metallform befestigt wird, was jedoch eher zu einer Verstärkung der zuvor beschriebenen Probleme als zu deren Abhilfe führte.

Der vorliegenden Erfindung liegt die Aufgabe zugrunde, ein Verfahren zur Herstellung einer Dichtung der zuvor beschriebenen Arten zur Verfügung zu stellen, bei dem das zuvor beschriebene Problem der unerwünschten Florschädigungen im Verbindungsbereich nicht auftritt oder zumindestens erheblich reduziert ist.

Diese Aufgabe wird erfindungsgemäß durch ein Verfahren mit den kennzeichnenden Merkmalen des Patentanspruchs 1 gelöst.

Das erfindungsgemäße Verfahren zur Herstellung einer Dichtung für ein Fahrzeug, insbesondere zur Herstellung einer Dichtung, die zwischen einer Fensterscheibe und einem zugehörigen Rahmen des Fahrzeuges einsetzbar ist und die einen elastischen Grundkörper und einen mit einer Florschicht versehenen Führungsbereich für die Fensterscheibe aufweist, sieht, wie der eingangs beschriebene Stand der Technik, vor, daß die Dichtung aus mehreren, miteinander endseitig durch eine thermische Behandlung verbundenen Dichtungsteilelementen ausgebildet wird. Während der thermischen Behandlung werden diese Dichtungsteilelemente mittels einer Metallform, die teilweise in Kontakt mit der Florschicht gebracht wird, in ihrer Lage fixiert, so daß dementsprechend diese Dichtungsteilelemente einwandfrei miteinander verbunden werden können. Die thermische Behandlung bewirkt, daß die miteinander zu verbindenden Enden der Dichtungsteilelemente mittels einer eingespritzten und erhitzten Mischung, insbesondere einer polymeren gummiartigen Mischung, versehen werden, so daß dementsprechend nach Abkühlung hier eine dauerhafte Verbindung resultiert, was auch in der entsprechenden Fachsprache als Anvulkanisieren oder Vulkanisieren bezeichnet wird. Bei dem erfindungsgemäßen Verfahren wird jedoch abweichend vom eingangs beschriebenen Stand der Technik eine Metallform verwendet, die in dem Bereich, der in Kontakt mit der Florschicht gebracht wird, mindestens teilweise thermisch und/oder druckmäßig von den übrigen Bereichen der Metallform entkoppelt wird. Diese thermische und/oder druckmäßige Entkoppelung des Bereiches der Metallform, die während der Verbindung der Enden der Dichtungsteilelemente in Kontakt mit der Florschicht gebracht wird, bewirkt, daß im Vergleich zu den übrigen Bereichen der Metallform, die das zuvor beschriebene Anvulkanisieren und somit das Verbinden der Enden der Dichtungsteilelemente herbeiführt, eine wesentlich geringere Temperatur und/oder ein wesentlich geringerer Druck auf die Florschicht ausgeübt wird. Dies hat zur Folge, daß die unerwünschten und irreversiblen Florbeschädigungen nicht oder nur im untergeordneten Maße auftreten und es insbesondere bei dem erfindungsgemäßen Verfahren auch nicht zu einer teilweisen Florverbrennung kommt, wie dies beim Stand der Technik der Fall ist. Dies wiederum führt dazu, daß durch das erfindungsgemäße Verfahren fehlerfreie Dichtungen erstellt werden können, da die hierbei möglicherweise auftretenden Florverlagerungen nicht, wie beim Stand der Technik, irreversibel sind, sondern sich reversibel entfernen lassen.

Klarstellend ist anzumerken, daß die Formulierung des Hauptanspruchs davon ausgeht, daß die nach dem erfindungsgemäßen Verfahren hergestellte Dichtung aus mehreren Dichtungsteilelementen ausgebildet wird, wobei selbstverständlich das erfindungsgemäße Verfahren und die erfindungsgemäße Metallform auch solche Ausgestaltungen abdecken sollen, bei denen die Dichtung durch endseitiges Verbinden eines einzigen Dichtungsteilelementes hergestellt wird, wie dies eingangs beim Stand der Technik beschrieben ist. Weiterhin ist festzuhalten, daß der verwendete Begriff und/oder sowohl additiv als auch alternativ zu sehen ist. Außerdem lassen sich das erfindungsgemäße Verfahren bzw. die erfindungsgemäße Metallform auf alle Dichtungen, unabhängig von ihrer individuellen Form, anwenden, sofern diese Dichtungen eine Florschicht aufweisen.

Das erfindungsgemäße Verfahren beinhaltet desweiteren den Vorteil, daß hierdurch die Kosten der Herstellung von Dichtungen erheblich verringert werden, da einerseits die Fehlproduktionsrate reduziert ist und im Vergleich zu dem eingangs beschriebenen bekannten Verfahren, bei dem eine Nachbeflockung im Verbindungsbereich durchgeführt werden muß, dieser zusätzliche Arbeitsschritt vermieden wird, ohne daß es dabei zu unerwünschten und irreversiblen Florverdrückungen kommt.

Um bei dem erfindungsgemäßen Verfahren die Verbindung der beiden Enden der Dichtung herbeizuführen, ist eine thermische Behandlung erforderlich, wie dies bereits zuvor beschrieben ist. Hierfür kann grundsätzlich jede Art der thermischen Behandlung ausgewählt werden, so zum Beispiel eine kontaktlose, auf Strahlung beruhende thermische Behandlung, wobei es jedoch besonders vorteilhaft ist, wenn die thermische Behandlung durch Kontakt mit der erhitzten Metallform durchgeführt wird.

Bezüglich der Temperatur, die bei dem erfindungsgemäßen Verfahren angewandt wird, ist zunächst allgemein festzuhalten, daß sich die Temperatur für die thermische Behandlung danach richtet, wie hoch die Temperatur zur Plastifizierung der eingespritzten Mischung, die die Verbindung der Enden ergibt, liegt. Üblicherweise wird die thermische Behandlung bei dem erfindungsgemäßen Verfahren bei einer Temperatur zwischen 140 °C und 230 °C, vorzugsweise zwischen 170 °C und 200 °C, durchgeführt.

Um bei dem erfindungsgemäßen Verfahren die thermische Entkopplung der Metallform in dem Bereich, der in Kontakt mit der Florschicht gebracht wird, und den übrigen Bereichen der Metallform herbeizuführen, bestehen grundsätzlich zwei Möglichkeiten.

So sieht die erste Möglichkeit des erfindungsgemäßen Verfahrens vor, daß hierbei während der thermischen Behandlung ein Isolationsmaterial angeordnet wird, durch das der Bereich der Metallform, der in Kontakt mit der Florschicht gebracht wird, abgedeckt wird. Dies wiederum bedeutet, daß nach Beendigung der thermischen Behandlung das Isolationsmaterial, das beispielsweise bewegbar an einem Schwenkarm befestigt ist, vom Kontaktbereich mit der Florschicht fortbewegt wird, so daß lediglich zu dem Zeitpunkt, zu dem die thermische Behandlung erfolgt, zwischen der Metallform und dem Kontaktbereich mit der Florschicht dieses Isolationsmaterial vorgesehen wird.

Bei der zweiten, besonders geeigneten Ausführungsform des erfindungsgemäßen Verfahrens wird eine solche Metallform verwendet, bei der im Bereich, der in Kontakt mit der Florschicht gebracht wird, ein thermisches Isolationsmaterial befestigt wird. Je nach Art des ausgewählten thermischen Isolationsmaterial kann dieses in dem Bereich der Metallform, der in Kontakt mit der Florschicht gebracht wird, kraft- und/oder formschlüssig befestigt werden, wobei eine besonders dauerhafte und somit bevorzugte Befestigung dadurch erreicht wird, daß das Isolationsmaterial auf den Bereich aufgeklebt wird, insbesondere unter Verwendung eines schnellhärtenden Silicondichtstoffes, der eine Temperaturbeständigkeit zwischen -50 °C und 250 °C besitzt.

Um neben der zuvor beschriebenen thermischen Entkopplung noch zusätzlich eine druckmäßige Entkoppelung in dem Bereich der Metallform, der in Kontakt mit der Florschicht gebracht wird, herbeizuführen, sieht eine Weiterbildung des erfindungsgemäßen Verfahrens vor, daß hierbei als thermisches Isolationsmaterial ein elastisches Isolationsmaterial ausgewählt wird. Diese Ausführungsvariante des erfindungsgemäßen Verfahrens erlaubt es, daß der Kontaktbereich der Metallform mit der Florschicht aufgrund der Elastizität des Isolationsmaterials während der Erzeugung der Verbindung (Anvulkanisation) einem entsprechend geringeren Anpreßdruck ausgesetzt wird als die übrigen Bereiche der Metallform, so daß dementsprechend bei dieser besonders vorteilhaften Ausgestaltung des erfindungsgemäßen Verfahrens solche Dichtungen hergestellt werden, bei denen nach der thermischen Behandlung keine unerwünschten Florverlagerungen und auch ebensowenig keine Anschmelzungen oder Verbrennungen der Florschicht zu erkennen sind.

Bei einer weiteren, vorteilhaften Ausgestaltung des erfindungsgemäßen Verfahren wird das Isolationsmaterial auf seiner zur Florschicht weisenden und damit in Kontakt tretenden Oberfläche mit einer Strukturierung versehen, um hierdurch zusätzlich zu erreichen, daß die Druckbeaufschlagung weiter reduziert wird. Desweiteren erlaubt eine derartige Strukturierung der Oberfläche eine zusätzliche Reduzierung der thermischen Belastung in diesem Kontaktbereich, was sich insbesondere dann bemerkbar macht, wenn bei einer entsprechend hohen Temperatur die thermische Behandlung durchgeführt werden muß.

Zusätzlich zu den zuvor beschriebenen Maßnahmen besteht bei dem erfindungsgemäßen Verfahren noch die Möglichkeit, zur weiteren thermischen und/oder druckmäßigen Entkopplung ein Isolationsmaterial zu verwenden, daß aus mehreren, übereinander angeordneten Lagen besteht. Diese Ausführungsvariante des erfindungsgemäßen Verfahrens erlaubt es, durch Variation des Materials, das die Lagen bildet, durch Variation der Lagendicke und durch Variation der Lagenanordnung eine vorherbestimmte thermische und/oder druckmäßige Entkopplung des Bereiches der Metallform, die in Kontakt mit der Florschicht gebracht wird, herbeizuführen.

Um bei dem erfindungsgemäßen Verfahren eine alternative druckmäßige Entkopplung herbeizuführen, wird eine Metallform verwendet, der in dem Bereich, der in Kontakt mit der Florschicht gebracht wird, eine entsprechende Vertiefung aufweist. Soll zusätzlich hierbei noch eine thermische Entkopplung herbeigeführt werden, so sieht eine Weiterbildung der zuvor beschriebenen Ausführungsvariante des erfindungsgemäßen Verfahrens vor, daß in der Vertiefung ein Isolationsmaterial oder mehrere Lagen des Isolationsmaterials oder ein elastisches Isolationsmaterial vorgesehen wird.

Bezüglich des Isolationsmaterials, das bei dem erfindungsgemäßen Verfahren den Bereich der Metallform, die in Kontakt mit der Florschicht gebracht wird, thermisch und/oder druckmäßig von den übrigen Bereichen der Metallform entkoppelt, ist allgemein festzuhalten, daß hierfür ein Isolationsmaterial ausgewählt wird, das einerseits eine gewisse mechanische Beständigkeit und andererseits eine Dauertemperaturbeständigkeit aufweist, deren Größe sich an der Temperatur der jeweils bei dem erfindungsgemäßen Verfahren eingesetzten thermischen Behandlung richtet.

Insbesondere wird bei dem erfindungsgemäßen Verfahren ein Isolationsmaterial aus der Gruppe, bestehend aus Polyimide, Polytetrafluorethylene, Polyphenylchinoxaline, Polybenzimidazole, Polyhydantoine, Polyparabansäuren, Polyisocyanurate, Polyphosphazene, Polycarboransiloxane und Polyorganosiloxane, insbesondere Silicon-Elastomere, ausgewählt, wobei vorzugsweise diese Isolationsmaterialien als Folien mit einer Dicke zwischen 0,001 mm und 10 mm, vorzugsweise zwischen 0,1 mm und 4 mm, eingesetzt werden.

Die vorliegende Erfindung betrifft desweiteren eine Metallform zur Durchführung des Verfahrens, mit dem dieses dauerhaft und problemlos auszuführen ist.

Die erfindungsgemäße Metallform zur Durchführung des erfindungsgemäßen Verfahrens weist einen ersten Halterungsabschnitt zur Fixierung der beiden Enden der thermisch miteinander zu verbindenden Dichtungsteilelemente und einen zweiten Halterungsabschnitt auf, der bei der thermischen Verbindung der beiden Enden die Lage der Dichtungsteilelemente durch Kontakt mit der Florschicht fixiert. Während der Einspritzung der Mischung, die während der thermischen Behandlung zur Verbindung der entsprechenden Enden der Dichtungsteilelemente dient, liegt der erste Halterungsabschnitt ausschließlich im Bereich der Verbindungsstelle und somit an dem elastischen Grundkörper der Dichtung an, was nach Einspritzung der Mischung zur entsprechenden Anvulkanisierung und damit zur dauerhaften Verbindung der Dichtungsteilelemente führt, während der zweite Halterungsabschnitt ausschließlich mit der Florschicht in Kontakt bringbar ist. Der erste Halterungsabschnitt ist während der thermischen Behandlung von dem zweiten Halterungsabschnitt mindestens teilweise thermisch und/oder druckmäßig entkoppelt, mit der Folge, daß bei der erfindungsgemäßen Metallform die Florschicht im Bereich des zweiten Halterungsabschnittes im Vergleich zu dem elastischen Grundkörper, an dem der erste Halterungsabschnitt anliegt, wesentlich weniger thermisch und/oder vom Anpreßdruck her belastet ist. Dies wiederum führt dazu, daß die Florschicht (Beflockung) eine reduzierte Temperatur- und Druckbelastung unterworfen ist und dementsprechend eine unerwünschte Florverlagerung sowie eine unverwünschte Floranschmelzung oder Florverbrennung verhindert werden. Selbst wenn bei der erfindungsgemäßen Metallform hier eine Florverlagerung stattfindet, ist diese nicht, wie beim Stand der Technik, irreversibel, sondern sie läßt sich als reversible Verlagerung wieder entfernen.

Abhängig davon, aus welchem Material der elastische Grundkörper besteht, ist der erste Halterungsabschnitt der Metallform bei der erfindungsgemäßen Metallform während der thermischen Behandlung auf eine Temperatur zwischen 140 °C und 230 °C, insbesondere zwischen 170 °C und 200 °C, aufgeheizt. Diese Aufheizung kann wahlweise durch direkte oder indirekte Beheizung der Metallform erfolgen.

Eine besonders geeignete Weiterbildung der erfindungsgemäßen Metallform sieht vor, daß hierbei der zweite Halterungsabschnitt auf seiner zur Florschicht weisenden Oberfläche mit dem Isolationsmaterial versehen ist, so daß dementsprechend bei Verwendung der erfindungsgemäßen Metallform die Florschicht während der thermischen Behandlung nur mit einer Temperatur belastet wird, die deutlich, insbesondere zwischen 20 °C und 80 °C, unterhalb der Temperaturbeaufschlagung liegt, die über den ersten Halterungsabschnitt auf den elastischen Grundkörper bei der Anvulkanisation herbeigeführt wird.

Insbesondere ist dieses, auf der Oberfläche des zweiten Halterungsabschnittes vorgesehenes Isolationsmaterial ein elastisches Isolationsmaterial, so daß infolge dieser Elastizität im Vergleich zu dem Grundkörper, auf den der erste Halterungsabschnitt drückt, die Florschicht mit einem verringerten Druck beaufschlagt wird.

Eine weitere Verringerung der Druckbelastung und der thermischen Belastung der Florschicht im Kontaktbereich wird dadurch bewirkt, daß bei einer anderen Ausführungsform der erfindungsgemäßen Metallform das Isolationsmaterial, das auf der Oberfläche des Halterungsabschnittes vorgesehen ist, auf seiner mit der Florschicht in Kontakt tretenden Oberfläche mit einer Strukturierung, insbesondere mit einer Mikrostrukturierung, versehen ist. Hierbei wird dieses Strukturierung vorzugsweise als Mikrostrukturierung ausgebildet und weist eine Vielzahl von punktförmigen Erhöhungen auf, die vorzugsweise als kreisförmige Erhöhungen ausgebildet sind und die einen Durchmesser aufweisen, der insbesondere in der Größenordnung zwischen 0,1 mm und 0,0001 mm variiert.

Bei einer weiteren Ausführungsform der erfindungsgemäßen Metallform ist diese im Bereich des zweiten Halterungsabschnittes mit einer Vertiefung zur Aufnahme des Isolationsmaterials versehen, wobei abhängig von der Tiefe dieser Vertiefung dann die Druckbeaufschlagung der Florschicht während der thermischen Behandlung zu variieren ist. Soll hierbei die Druckbeaufschlagung der Florschicht nur geringfügig verringert werden, weist die Vertiefung eine relativ geringe Tiefe auf, so daß das Isolationsmaterial, insbesondere das elastische Isolationsmaterial, über den zweiten Halterungsabschnitt herausragt. Soll hingegen eine vergrößerte Druckentlastung der Florschicht herbeigeführt werden, so bietet es sich an, eine entsprechend tiefe Vertiefung vorzusehen, so daß das Isolationsmaterial bündig von seiner Oberfläche in die Oberfläche des Halterungsabschnittes übergeht. Desweiteren stellt eine derartige Vertiefung sicher, daß das Isolationsmaterial, insbesondere eine entsprechende Isolationsfolie, dauerhaft und verschleißfest an dem zweiten Halterungsabschnitt gehaltert werden kann.

Ist bei der erfindungsgemäßen Metallform eine besonders hohe thermische Entkopplung erwünscht, so sieht eine andere Ausführungsform der erfindungsgemäßen Metallform vor, daß hierbei im zweiten Halterungsabschnitt ein aus mehreren Lagen bestehendes Isolationsmaterial angeordnet ist.

Insbesondere durch Variation der Schichtdicke des Isolationsmaterials läßt sich bei der erfindungsgemäßen Metallform eine eingestellte thermische und druckmäßige Entkopplung dadurch herstellen, daß hier eine Schichtdicke ausgewählt wird, die zwischen 0,001 mm und 10 mm, insbesondere zwischen 0,1 mm und 4 mm, variiert. Um ein derartiges Isolationsmaterial, bei dem es sich bevorzugt um eine Isolationsfolie handelt, sicher am zweiten Halterungsabschnitt der erfindungsgemäßen Metallform zu befestigen, schlägt eine besonders vorteilhafte Ausgestaltung der erfindungsgemäßen Metallform vor, daß das Isolationsmaterial auf die Oberfläche des zweiten Halterungsabschnittes oder in eine hierin vorgesehene Vertiefung geklebt ist. Hierbei eignen sich insbesondere thermisch stabile Klebemittel, so vorzugsweise schnellhärtende Silicon-Elastomere, die üblicherweise auch als schnellhärtende Silicondichtstoffe im Handel erhältlich sind und die eine Temperaturbeständigkeit besitzen, die zwischen -50 °C bis 250 °C variiert.

Die vorstehenden Ausführungsformen der erfindungsgemäßen Metallform stellen schwerpunktmäßig heraus, daß hierbei der zweite Halterungsabschnitt aus dem Material gefertigt ist, aus dem auch der erste Halterungsabschnitt besteht, wobei hierfür schwerpunktmäßig ein Metall oder eine Metall-Legierung verwendet wird.

Eine andere Ausgestaltung der erfindungsgemäßen Metallform schlägt vor, daß zur thermischen und/oder druckmäßigen Entkopplung des ersten Halterungsabschnittes vom zweiten Halterungsabschnitt der zweite Halterungsabschnitt insgesamt aus dem Isolationsmaterial besteht oder daß durchgehend über die Dicke zwischen dem ersten Halterungsabschnitt und dem zweiten Halterungsabschnitt ein die Wärmeleitung unterbrechendes Isolationsmaterial als Sperrschicht vorgesehen ist, so daß ein direkter Wärmefluß vom ersten Halterungsabschnitt zum zweiten Halterungsabschnitt weitestgehend unterbunden ist. Zur weiteren Verbesserung der thermischen Entkopplung kann dann bei einer anderen Ausgestaltung der erfindungsgemäßen Metallform der zweite Halterungsabschnitt aus einem Material erstellt werden, das einerseits eine hinreichende mechanische Belastbarkeit aufweist und zusätzlich noch elastisch ist und desweiteren eine im Vergleich zu Metall schlechte Wärmeleitfähigkeit besitzt.

Bezüglich des Materials, das als Isolationsmaterial ausgewählt wird, ist allgemein festzuhalten, daß hierbei dieses Material eine hinreichende mechanische Beständigkeit im Temperaturbereich zwischen 140 °C und 230 °C und insbesondere im Temperaturbereich zwischen 170 °C und 200 °C besitzt und zudem noch, falls eine druckmäßige Entkopplung erwünscht ist, eine gewisse Elastizität aufweist, wobei insbesondere das Isolationsmaterial aus der Gruppe ausgewählt ist, die aus Polyimiden, Polytetrafluorethylenen, Polyphenylchinoxalinen, Polybenzimidazolen, Polyhydantoinen, Polyparabansäuren, Polyisocyanuraten, Polyphosphazenen, Polycarboransiloxanen und Polyorganosiloxanen, insbesondere Silicon-Elastomeren, besteht.

Wie bereits vorstehend wiederholt beschrieben ist, werden das erfindungsgemäße Verfahren und die erfindungsgemäße Metallform zur Herstellung von Dichtungen für Fahrzeuge verwendet, wobei diese Dichtungen, bei denen es sich insbesondere um Gummiprofile der unterschiedlichsten Ausgestaltungen handelt, mit einer Florschicht (Flockbeschichtung oder Flocktape) versehen sind, um bestimmte Gleiteigenschaften zu erreichen. Bevorzugte Beispiele hierfür sind solche Dichtungen, die zwischen einer Fensterscheibe und einem zugehörigen Rahmen des Fahrzeuges einsetzbar sind, wobei die Fensterscheibe während der Auf- und Abwärtsbewegung durch den mit der Florschicht versehenen Führungsbereich gehaltert und geführt wird.

Vorteilhafte Weiterbildungen des erfindungsgemäßen Verfahrens sowie der erfindungsgemäßen Metallform sind in den Unteransprüchen angegeben.

Die erfindungsgemäße Metallform wird nachfolgend anhand eines Ausführungsbeispieles in Verbindung mit der Zeichnung näher erläutert. Es zeigen:
- Figur 1: eine schematische Seitenansicht eines Fahrzeuges;
- Figur 2: eine schematische Ansicht eines Teilbereiches einer nach dem zuvor beschriebenen Verfahren hergestellten Dichtung
- Figur 3: eine schematische Abbildung der zur Halterung der Dichtung verwendeten Vorrichtung während der thermischen Behandlung, jedoch mit entfernter Metallform und
- Figur 4: eine schematische Abbildung der erfindungsgemäßen Metallform, die in die Vorrichtung gemäß Figur 3 einsetzbar ist.

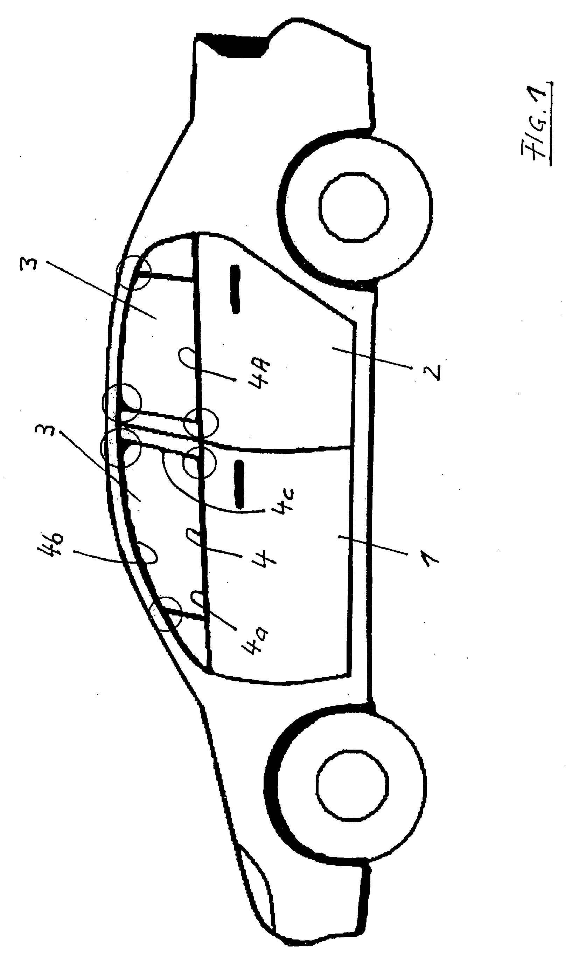

In den Figuren 1 bis 4 sind die selben Teile mit den selben Bezugszeichen versehen.

In Figur 1 ist schematisch in der Seitenansicht ein Kraftfahrzeug abgebildet, das an der Fahrertür 1 und der Fondtür 2 die üblichen, durch Absenken zu öffnenden Fensterscheiben 3 aufweist, die in den entsprechenden Türrahmen angeordnet sind.

Die absenkbaren Fensterscheiben 3 weisen jeweils eine rundumlaufende Dichtung 4 bzw. 4A auf, wobei jede Dichtung 4 bzw. 4A in den zur Tür 1 bzw. 2 gehörenden Rahmen für die Fensterscheiben 3 gehaltert sind.

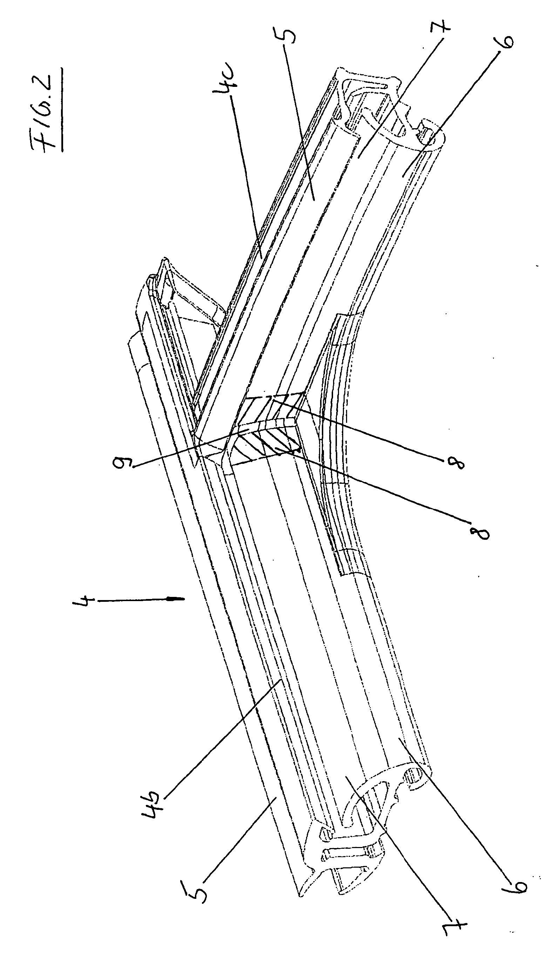

Jede Dichtung 4 bzw. 4A umfaßt einen individuell auf das jeweilige Fahrzeug angepaßten und geformten elastischen Grundkörper 5, der vorzugsweise aus Gummi besteht, wie dies in der Figur 2 abgebildet ist. Mit dem elastischen Grundkörper 5 ist ein Führungsbereich 6 einstückig ausgebildet, der mit einer Florschicht 7 (Beflockung) versehen ist, wobei sich die Florschicht 7 in gleitender Anlage mit der Fensterscheibe 3 befindet und diese während der Auf- bzw. Abwärtsbewegung haltert.

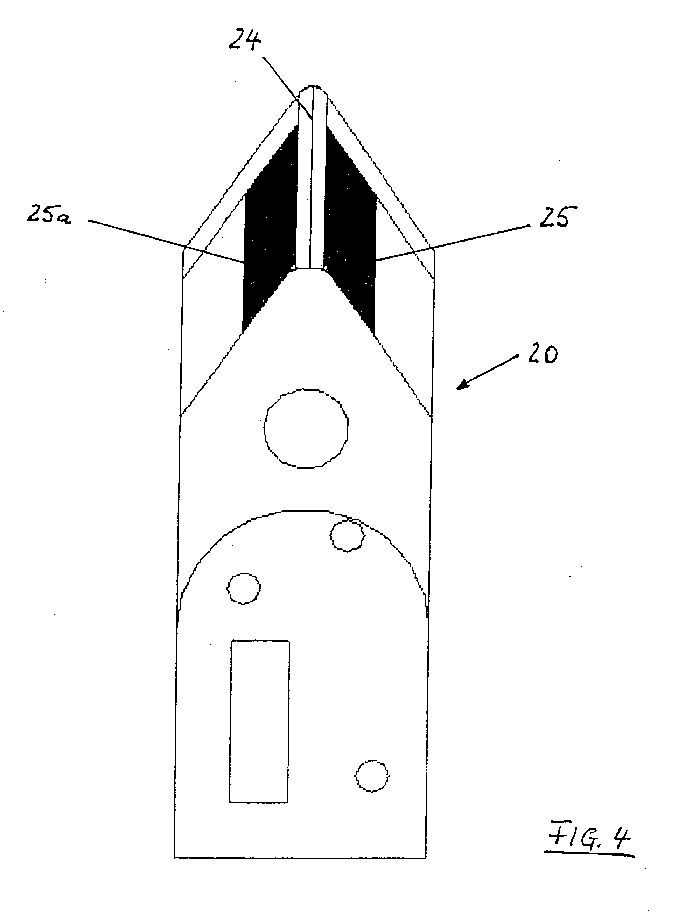

Um die Dichtung 4 bzw. 4A herzustellen, werden entsprechende Dichtungsteilelemente 4a bis 4c aus einem endlos extrudierten Dichtungsprofil zugeschnitten und an den Stellen miteinander verbunden, die in der Figur 1 mit Kreisen beispielhaft gekennzeichnet sind. Eine derartige Verbindung geschieht bei einer Temperatur zwischen vorzugsweise 170 °C und 200 °C, wobei die Dichtung während dieser thermischen Behandlung mittels einer Metallform 20, wie diese in Figur 4 im Detail schematisch abgebildet ist, gehaltert wird. Hierbei tritt diese Metallform 20 über ihre zweiten Halterungsabschnitte 25 und 25a teilweise in Kontakt mit der Florschicht 7 und bewirkt dort, daß bei dem herkömmlichen Verfahren und der hierfür verwendeten bekannten Metallform eine unerwünschte und irreversible Verformung des Flors der Florschicht 7 im Kontaktbereich mit der Metallform auftritt, wie dies in Figur 2 durch die mit 8 gekennzeichneten Kontaktbereiche angedeutet ist. Klarstellend hierzu ist jedoch anzumerken, daß eine derartige irreversible Verformung des Flors der Florschicht 7 jedoch bei der in Figur 4 gezeigten Metallform 20 nicht auftritt.

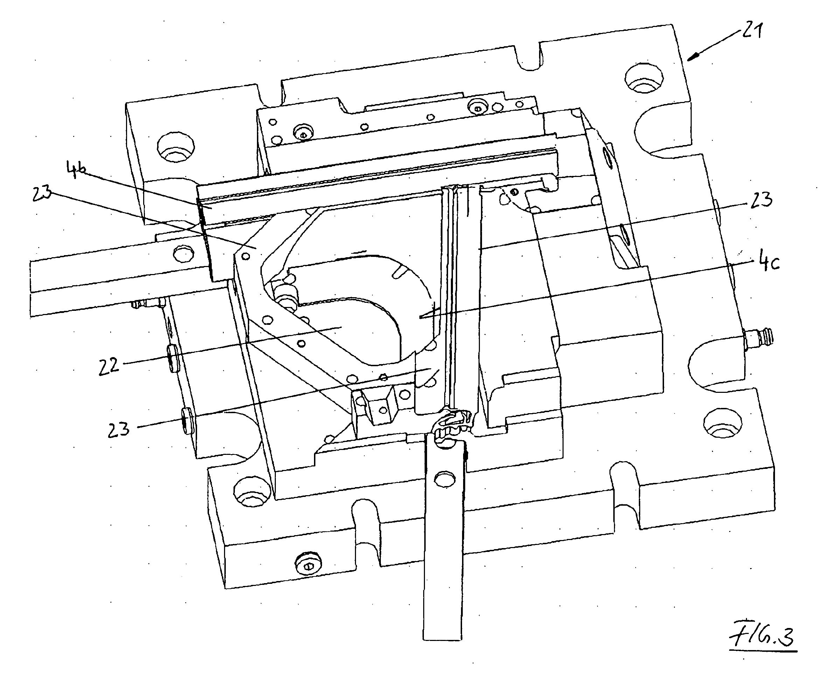

Zusätzlich zu der Halterung der Dichtungsteilelemente 4a bis 4c während ihres Verbindens durch die thermische Behandlung mittels der Metallform 20 werden die Dichtungsteilelemente 4a bis 4c noch durch eine Vorrichtung 21 gehaltert, die ausschnittsweise und schematisch in Figur 3 abgebildet ist. Diese insgesamt mit 21 bezeichnete Vorrichtung haltert auch die Metallform 20, die zur Verdeutlichung der Abbildung in Figur 3 nur von ihrer Position 22 her, nicht jedoch selbst, eingezeichnet ist.

Um diese zusätzliche Halterung der Dichtungsteilelemente 4a bis 4c während der thermischen Behandlung zu bewirken und eine einwandfreie Verbindung (Anvulkanisation oder Vulkanisation) der Eckbereiche 9 (Figur 2) sicherzustellen, weist die Vorrichtung 21 eine Reihe von Arretierungselementen 23 auf, die die Lage der nur beispielhaft abgebildeten und miteinander zu verbindenden Dichtungsteilelemente 4b und 4c fixieren. Eine derartige in Figur 3 gezeigte Vorrichtung 21 gehört mit Ausnahme der speziell ausgestalteten Metallform 20 zum Stand der Technik und ist individuell auf die Form der jeweils zu konfektionierende Dichtung 4 bzw. 4A angepaßt.

Wie in Figur 4 im Detail schematisch dargestellt ist, weist die Metallform 20 einen ersten Halterungsabschnitt 24 und einen zweiten Halterungsabschnitt 25 bzw. 25a auf, wobei jeweils ein zweiter Halterungsabschnitt 25 bzw. 25a benachbart vom ersten Halterungsabschnitt 24, aber mit Abstand hiervon, angeordnet ist.

Der erste Halterungsabschnitt 24 ist so ausgestaltet, daß nach Anordnung der Metallform 20 (Figur 4) in die in Figur 3 eingezeichnete Position 22 der dort abgebildeten Vorrichtung der erste Halterungsabschnitt 24 bei der thermischen Behandlung mit dem endseitig der Dichtungsteilelemente 4b und 4c vorhandenen elastischen Grundkörper 5 in Eingriff tritt, so daß nach Einspritzen einer Mischung, insbesondere einer polymeren gummiartigen Mischung, an diese Stelle der Eckbereich 9 (Figur 2) der Dichtung 4 hergestellt wird, was vorstehend auch als Vulkanisieren oder Anvulkanisieren bezeichnet ist. Gleichzeitig liegen beide zweiten Halterungsabschnitte 25 bzw. 25a im Kontaktbereich 8 der Dichtungsteilelemente 4b und 4c an der dort befindlichen Florschicht 7 an, wobei durch diese Anlage die beiden Dichtungsteilelemente 4b und 4c zusätzlich in ihrer Lage fixiert werden.

Um bei dieser Anlage der beiden zweiten Halterungsabschnitte 25 bzw. 25a eine thermische und druckmäßige Entkopplung zu erreichen, ist die Metallform im Bereich der zweiten Halterungsabschnitte 25 und 25a mit einer Vertiefung versehen, die jeweils ein hierauf in seiner Größe angepaßtes elastisches Isolationsmaterial aufnimmt, das aus einer Siliconfolie ausgebildet wird, die mittels eines schnellhärtenden Silicondichtstoffes als Kleber vollflächig in der Vertiefung festgeklebt ist. Hierfür wird als Siliconfolie ein handelsübliches Produkt (Hersteller: Zenker by Fackelmann) und als Kleber der zuvor genannte Silicondichtstoff (Hersteller: PETEC Verbindungstechnik GmbH) verwendet, wobei erstere eine Temperaturbeständigkeit zwischen -40 °C und 240 °C und letzterer eine Temperaturbeständigkeit zwischen -50 °C und 250 °C besitzen.

Aufgrund dieser thermischen und druckmäßigen Entkopplung zwischen erstem Halterungsabschnitt 24 und den beiden zweiten Halterungsabschnitten 25 bzw. 25a wird wirksam bei der Vulkanisation, die vorzugsweise bei einer Temperatur zwischen 170 °C und 200 °C durchgeführt wird, die Ausbildung von unerwünschten und irreversiblen Florverlagerungen sowie das Auftreten von thermischen Florbeschädigungen im Kontaktbereich 8 (Figur 2) verhindert, ohne daß hierdurch die Haltbarkeit des Eckbereiches 9 verringert wird.

## Patentansprüche

1. Verfahren zur Herstellung einer Dichtung für ein Fahrzeug, insbesondere zur Herstellung einer Dichtung, die zwischen einer Fensterscheibe und einem zugehörigen Rahmen des Fahrzeuges einsetzbar ist, wobei die Dichtung einen elastischen Grundkörper und einen mit einer Florschicht versehenen Führungsbereich für eine Fensterscheibe aufweist, wobei die Dichtung aus mehreren, miteinander endseitig durch eine thermische Behandlung verbundenen Dichtungsteilelementen ausgebildet wird, die während der thermischen Behandlung mittels einer Metallform, die teilweise in Kontakt mit der Florschicht gebracht wird, in ihrer Lage fixiert werden, **dadurch gekennzeichnet, daß** die thermische Behandlung durch Kontakt mit der erhitzten Metallform durchgeführt wird, die in dem Bereich, der in Kontakt mit der Florschicht gebracht wird, mindestens teilweise thermisch und/oder druckmäßig von den übrigen Bereichen der Metallform derart entkoppelt wird, daß während der thermischen Behandlung ein thermisches Isolationsmaterial angeordnet wird, durch das der Bereich, der in Kontakt mit der Florschicht gebracht wird, abgedeckt wird.

2. Verfahren nach Anspruch 1, **dadurch gekennzeichnet, daß** die thermische Behandlung zwischen 140 °C und 230 °C durchgeführt wird.

3. Verfahren nach einem Ansprüche 1 oder 2, **dadurch gekennzeichnet, daß** eine solche Metallform verwendet wird, bei der im Bereich, der in Kontakt mit der Florschicht gebracht wird, ein thermisches Isolationsmaterial befestigt wird.

4. Verfahren nach einem der vorangehenden Ansprüche, **dadurch gekennzeichnet, daß** als thermisches Isolationsmaterial ein elastisches Isolationsmaterial ausgewählt wird.

5. Verfahren nach einem der vorangehenden Ansprüche, **dadurch gekennzeichnet, daß** das Isolationsmaterial auf seiner mit der Florschicht in Kontakt tretenden Oberfläche mit einer Strukturierung versehen wird.

6. Verfahren nach einem der vorangehenden Ansprüche, **dadurch gekennzeichnet, daß** ein aus mehreren Lagen bestehendes Isolationsmaterial verwendet wird.

7. Verfahren nach einem der vorangehenden Ansprüche, **dadurch gekennzeichnet, daß** in dem Bereich, der in Kontakt mit der Florschicht gebracht wird, die Metallform mit einer Vertiefung zur Aufnahme des Isolationsmaterials versehen wird.

8. Verfahren nach einem der vorangehenden.Ansprüche, **dadurch gekennzeichnet, daß** als Isolationsmaterial ein Material aus der Gruppe, bestehend aus Polyimide, Polytetrafluorethylene, Polyphenylchinoxaline, Polybenzimidazole, Polyhydantoine, Polyparabansäuren, Polyisocyanurate, Polyphosphazene, Polycarboransiloxane und Polyorganosiloxane, insbesondere Silicon-Elastomere, ausgewählt wird.

9. Metallform zur Durchführung des Verfahrens nach einem der vorangehenden Ansprüche, mit einem ersten Halterungsabschnitt (24) zur Fixierung der beiden Enden der thermisch miteinander zu verbindenden Dichtungsteilelemente (4a bis 4c) und einem zweiten Halterungsabschnitt (25, 25a), der bei der thermischen Verbindung der beiden Enden die Lage der Dichtungsteilelemente (4a bis 4 c) durch Kontakt mit der Florschicht (7) fixiert, **dadurch gekennzeichnet, daß** während der thermischen Behandlung der erste Halterungsabschnitt (24) ausschließlich mit dem elastischen Grundkörper (5) der Dichtung (4, 4A) und der zweite Halterungsabschnitt (25, 25a) ausschließlich mit der Florschicht (7) in Kontakt bringbar sind, daß der erste Halterungsabschnitt (24) von dem zweiten Halterungsabschnitt (25, 25a) mindestens teilweise thermisch und/oder druckmäßig entkoppelt ist und daß der zweite Halterungsabschnitt (25, 25a) auf seiner zur Florschicht (7) weisenden Oberfläche mit dem Isolationsmaterial versehen ist.

10. Metallform nach Anspruch 9, **dadurch gekennzeichnet, daß** der erste Halterungsabschnitt (24) der Metallform (20) während der thermischen Behandlung auf eine Temperatur zwischen 140 °C und 230 °C aufgeheizt ist.

11. Metallform nach Anspruch 9, **dadurch gekennzeichnet, daß** das Isolationsmaterial ein elastisches Isolationsmaterial ist.

12. Metallform nach Anspruch 9 oder 10, **dadurch gekennzeichnet, daß** das Isolationsmaterial auf seiner mit der Florschicht (7) in Kontakt tretenden Oberfläche mit einer Strukturierung versehen ist.

13. Metallform nach einem der Ansprüche 9 bis 11, **dadurch gekennzeichnet, daß** die Metallform (20) im Bereich des zweiten Halterungsabschnittes (25, 25a) eine Vertiefung zur Aufnahme des Isolationsmaterials aufweist.

14. Metallform nach einem der Ansprüche 9 bis 13, **dadurch gekennzeichnet, daß** im zweiten Halterungsabschnitt (25, 25a) ein aus mehreren Lagen bestehendes Isolationsmaterial angeordnet ist.

15. Metallform nach einem der Ansprüche 9 bis 14, **dadurch gekennzeichnet, daß** das Isolationsmaterial in einer Schichtdicke zwischen 0,001 mm und 10 mm, vorzugsweise zwischen 0,1 mm und 4 mm, auf dem zweiten Halterungsabschnitt (25, 25a) befestigt, insbesondere geklebt, ist.

16. Metallform nach einem der Ansprüche 9 bis 12, **dadurch gekennzeichnet, daß** der zweite Halterungsabschnitt (25, 25a) aus dem Isolationsmaterial besteht.

17. Metallform nach einem der Ansprüche 9 bis 16, **dadurch gekennzeichnet, daß** das Isolationsmaterial ein Material aus der Gruppe, bestehend aus Polyimide, Polytetrafluorethylene, Polyphenylchinoxaline, Polybenzimidazole, Polyhydantoine, Polyparabansäuren, Polyisocyanurate, Polyphosphazene, Polycarboransiloxane und Polyorganosiloxane, insbesondere Silicon-Elastomere, umfaßt.

## Claims

1. A method to produce a seal for a vehicle, especially to produce a seal, which is usable between the window and the belonging frame of the vehicle, whereby the seal has an elastic base body and a guiding area, which is provided with a pile layer for the window, whereby the seal is build out of several seal elements, which are connected at the ends with each other by a thermal treatment and which are fixed in their position by a metal form that is partially brought into contact with the pile layer during the thermal treatment, **characterized in that** the thermal treatment is carried out by contact with the heated metal form, which is decoupled at least partially thermally and/or in terms of compression in the section, which is brought into contact with the pile layer from the remaining sections of the metal form in such a way, that during the thermal treatment a thermal isolation material is provided by which said section, which is brought into contact with the pile layer, is covered.

2. The method according to claim 1, **characterized in that** the thermal treatment is carried out between 140°C and 230°C.

3. The method according to one of the claims 1 or 2, **characterized in that** such a metal form is used, at which a thermal isolation material is fixed in the section, which is brought into contact with the pile layer.

4. The method according to one of the preceding claims, **characterized in that** an elastic isolation material is chosen as the thermal isolation material.

5. The method according to one of the preceding claims, **characterized in that** the isolation material is provided with a texture on its surface, which comes into contact with the pile layer.

6. The method according to one of the preceding claims, **characterized in that** an isolation material is used, which consists of several layers.

7. The method according to one of the preceding claims, **characterized in that** the metal form is provided with a cavity for taking up the isolation material in the section, which is brought into contact with the pile layer.

8. The method according to one of the preceding patent claims, **characterized in that** a material of the group consisting of polyimides, polytetrafluorethylenes, polyphenylchinoxaline, polybenzimidazoles, polyhydantoine, polyparabanic acid, polyisocyanurate, polyphosphazene, polycarboransiloxane and polyorganosiloxane, preferably silicon-elastomere.

9. A metal form mold for carrying out the method according to one of the preceding claims, with a first mounting section (24) for the fixation of both of the ends of the seal elements, which are to connect thermally (4a to 4c), and with a second mounting section (25, 25a), which fixes the position of the seal elements (4a to 4c) by contact with the pile layer (7) during the thermal connection of both of the ends, **characterized in that** the first mounting section (24) is only able to be brought in contact with the elastic base body (5) of the seal (4, 4A) during the thermal treatment and the second mounting section (25, 25a) is only able to be brought in contact with the pile layer (7), that the first mounting section (24) is decoupled at least partially thermally and/or in terms of compression from the second mounting section (25, 25a) and that the second mounting section (25, 25a) is provided with the isolation material on its surface, which is pointing to the pile layer (7).

10. The metal form according to claim 9, **characterized in that** the first mounting section (24) of the metal form (20) is heated up to a temperature between 140 °C and 230 °C during the thermal treatment.

11. The metal form according to claim 9, **characterized in that** the isolation material is an elastic isolation material.

12. The metal form according to claim 9 or 10, **characterized in that** the isolation material is provided with a texture on its surface, which comes into contact with the pile layer (7).

13. The metal form according to one of the claims 9 to 11, **characterized in that** the metal form (20) is provided with a cavity for taking up the isolation material in the region of the second mounting section (25, 25a).

14. The metal form according to one of the claims 9 to 13, **characterized in that** an isolation material, which consists of several layers, is provided in the second mounting section (25, 25a).

15. The metal form according to one of the claims 9 to 14, **characterized in that** the isolation material is provided, especially glued, in a layer thickness between 0,001 mm and 10 mm, preferably between 0,1 mm and 4 mm, on the second mounting section (25, 25a).

16. The metal form according to one of the claims 9 to 12, **characterized in that** the second mounting section (25, 25a) consists of the isolation material.

17. The metal form according to one of the claims 9 to 16, **characterized in that** the isolation material includes a material of the group consisting of polyimides, polytetrafluorethylenes, polyphenylchinoxaline, polybenzimidazoles, polyhydantoine, polyparabanic acid, polyisocyanurate, polyphosphazene, polycarboransiloxane and polyorganosiloxane, preferably silicon-elastomere.

## Revendications

1. Procédé de fabrication d'un joint pour un véhicule, en particulier pour la fabrication d'un joint, qui est insérable entre une vitre et un châssis correspondant du véhicule, le joint comportant un corps de base élastique et une zone de guidage munie d'une couche de crêpe pour une vitre, le joint étant formé de plusieurs éléments partiels du joint reliés entre eux par leurs extrémités grâce à un traitement thermique, qui sont fixés dans sa couche pendant le traitement thermique au moyen d'un moule en métal, qui est mis partiellement en contact avec la couche de crêpe, **caractérisé en ce que** le traitement thermique est réalisé par la mise en contact avec le moule en métal chauffé, qui est découplé ainsi dans la zone, qui est mise en contact avec la couche de crêpe, au moins partiellement de manière thermique et/ou par pression des zones restantes du moule en métal, **en ce qu'**un matériau d'isolation thermique est agencé pendant le traitement thermique, recouvrant ainsi la zone, qui est mise en contact avec la couche de crêpe.

2. Procédé selon la revendication 1, **caractérisé en ce que** le traitement thermique est réalisé entre 140 °C et 230 °C.

3. Procédé selon la revendication 1 ou 2, **caractérisé en ce qu'**un moule en métal de ce type est utilisé, auquel est fixé dans la zone, qui est mise en contact avec la couche de crêpe, un matériau d'isolation thermique.

4. Procédé selon l'une des revendications précédentes, **caractérisé en ce qu'**un matériau d'isolation élastique a été choisi comme matériau d'isolation thermique.

5. Procédé selon l'une des revendications précédentes, **caractérisé en ce que** le matériau d'isolation est muni d'une structuration sur sa surface entrant en contact avec la couche de crêpe.

6. Procédé selon l'une des revendications précédentes, **caractérisé en ce qu'**un matériau d'isolation se composant de plusieurs couches est utilisé.

7. Procédé selon l'une des revendications précédentes, **caractérisé en ce que** le moule en métal est muni d'un creux pour recevoir le matériau d'isolation dans la zone, qui est mise en contact avec la couche de crêpe.

8. Procédé selon l'une des revendications précédentes, **caractérisé en ce qu'**un matériau issu du groupe se composant de polyimide, polytétrafluoroéthylène, polyphénylquinoxaline, polybenzimidazole, polyhydantoïne, acides polyparabaniques, polyisocyanurate, polyphosphazène, polycarboranesiloxane et polyorganosiloxane, en particulier d'élastomère de silicone, est choisi comme matériau d'isolation.

9. Moule en métal destiné à la mise en oeuvre du procédé selon l'une des revendications précédentes, doté d'une première partie de fixation (24) pour fixer les deux extrémités des éléments partiels du joint (4a à 4c) devant être reliés entre eux de manière thermique et d'une deuxième partie de fixation (25, 25a), qui fixe lors de la liaison thermique des deux extrémités la couche des éléments partiels du joint (4a à 4c) par la mise en contact avec la couche de crêpe (7), **caractérisé en ce que** la première partie de fixation (24) pouvant exclusivement être amenée en contact avec le corps de base élastique (5) du joint (4, 4A) et la deuxième partie de fixation (25, 25a) exclusivement avec la couche de crêpe (7) pendant le traitement thermique, **en ce que** la première partie de fixation (24) est découplée au moins partiellement de manière thermique et/ou par pression de la deuxième partie de fixation (25, 25a) et que la deuxième partie de fixation (25, 25a) est pourvue du matériau d'isolation sur sa surface désignant la couche de crêpe (7).

10. Moule en métal selon la revendication 9, **caractérisé en ce que** la première partie de fixation (24) du moule en métal (20) est chauffée pendant le traitement thermique à une température comprise entre 140°C et 230 °C.

11. Moule en métal selon la revendication 9, **caractérisé en ce que** le matériau d'isolation est un matériau d'isolation élastique.

12. Moule en métal selon la revendication 9 ou 10, **caractérisé en ce que** le matériau d'isolation est muni d'une structuration sur sa surface entrant en contact avec la couche de crêpe (7).

13. Moule en métal selon l'une des revendications 9 à 11, **caractérisé en ce que** le moule en métal (20) comporte dans la zone de la deuxième partie de fixation (25, 25a) un creux pour recevoir le matériau d'isolation.

14. Moule en métal selon l'une des revendications 9 à 13, **caractérisé en ce qu'**un matériau d'isolation se composant de plusieurs couches est agencé dans la deuxième partie de fixation (25, 25a).

15. Moule en métal selon l'une des revendications 9 à 14, **caractérisé en ce que** le matériau d'isolation est fixé, en particulier collé, sur la deuxième partie de fixation (25, 25a) selon une épaisseur de couche comprise entre 0,001 mm et 10 mm, de préférence entre 0,1 mm et 4 mm.

16. Moule en métal selon l'une des revendications 9 à 12, **caractérisé en ce que** la deuxième partie de fixation (25, 25a) se compose du matériau d'isolation.

17. Moule en métal selon l'une des revendications 9 à 16, **caractérisé en ce que** le matériau d'isolation comprend un matériau issu du groupe se composant de polyimide, polytétrafluoroéthylène, polyphénylquinoxaline, polybenzimidazole, polyhydantoïne, acides polyparabaniques, polyisocyanurate, polyphosphazène, polycarboranesiloxane et polyorganosiloxane, en particulier d'élastomère de silicone.
